(19) **Europäisches Patentamt**
**European Patent Office**
**Office européen des brevets**

(11) Publication number: **0 114 996**
**A2**

(12) # EUROPEAN PATENT APPLICATION

(21) Application number: **83112630.5**

(22) Date of filing: **15.12.83**

(51) Int. Cl.³: **G 06 K 9/46**

(30) Priority: **27.12.82 US 453017**

(43) Date of publication of application:
**08.08.84 Bulletin 84/32**

(84) Designated Contracting States:
**CH DE FR GB IT LI NL**

(71) Applicant: **International Business Machines Corporation**
**Old Orchard Road**
**Armonk, N.Y. 10504(US)**

(72) Inventor: **Bednar, Gregory Martin**
**2640 Brook Hollow Road**
**Matthews, NC 28105(US)**

(72) Inventor: **Harmon, John Charles**
**831 Silver Fox Drive**
**Concord, NC 28025(US)**

(72) Inventor: **Naraismha, Manthri Selvapullai Iyengar**
**7300 Hawkstand Lane**
**Charlotte, NC 28210(US)**

(74) Representative: **Atchley, Martin John Waldegrave**
**IBM United Kingdom Patent Operations Hursley Park**
**Winchester, Hants, SO21 2JN(GB)**

(54) **Character recognition utilizing transition measurements.**

(57) A character recognition system in which a representation of a character is scanned along a plurality of scan lines and measurements are made based on the transitions in each scan line between areas of the character and areas of the background (6). For each scan line a vector is generated based on the transition measurements for the scan line. The vectors are selectively combined logically in order to identify the character (8).

FIG. 1

0114996

/

# CHARACTER RECOGNITION UTILIZING TRANSITION MEASUREMENTS

The present invention relates to a method and apparatus for recognising printed characters, in particular handwritten characters.

In the field of character recognition it is desirable to provide an efficient and inexpensive system for identifying characters, particularly hand-printed characters. Such a system would be very useful in situations where the information required at a central processing location is first generated remotely by hand. If it is possible to avoid having to transcribe the hand printed information at the central site by automatically reading an original hand printed document at the remote site direct interaction with the central processing system becomes viable. The present invention relates to a system which can be used for such a process without undue expense.

Currently available character recognition systems attempt analysis of a standardized or normalized form of a character. In these systems a character on the document is scanned and recorded as a series of rows of binary bits. In many instances the area occupied by a character is larger than it needs to be to make recognition possible. The recording and analysis of superfluous data bits can be time consuming and costly. To avoid these difficulties it is usual to generate a representation of the character which is as small a size as possible but which is large enough to ensure that recognition of the character is possible. This is commonly known as "normalization" of the character. It is known to produce a representation of a character which is about one-half the actual original size of the character during this normalization process. A technique of normalization is described in U.S. Patent Application S.N. 453018 (CT9-81-009), assigned to the present Applicant. That application describes a process whereby a character having a scanned size of 64 rows high by 64 columns wide may be represented by a representation having a size of 16 rows and 13 columns. For such a representation to be useful, it is essential that it be combined with an efficient and reliable recognition system. The object of the present invention is to provide such a system.

It is found that characters can be grouped in classes and all the characters in a particular class have certain common features, even if the character is distorted when it is written or printed. If it were possible to find a character feature which always appears in that character class and never appears in any other character class then it would be possible to recognise characters of that class simply by identifying that particular feature.

There have been many previous attempts to identify features of characters that would enable them to be distinguishable from one another. However, the techniques developed always required very sophisticated and expensive recognition techniques.

Patent Specification US-A-4,155,072 to Kawa, issued May 15, 1979 describes a character recognition apparatus capable of recognizing highly distorted characters. However, for Kawa to be effective the shape of the character must be altered. In Kawa, a character is scanned row by row and each row is modified or normalized in accordance with an averaging algorithm which normalizes the horizontal size of the character in accordance with a magnification factor. By doing this Kawa ensures that each distorted character becomes more like its undistorted form and thereby is more readily reconcilable with his recognition logic. After normalizing the character, Kawa measures the starting and ending of the character in each scan row and divides the portion between the starting and ending into six equal intervals. Kawa then has to translate these six equal intervals into a classification code. By correlating the values of the starting and ending positions and the classification code with a table of codes representative of standard characters, Kawa is able to identify the character read. The Kawa procedure has a number of disadvantages. Firstly, it requires that the character being recognized be put through an elaborate character normalization routine which ensures that the character is only slightly distorted and, therefore, cannot be used with normalization apparatus which simply reduces and justifies a character. Kawa also requires substantial gating and timing circuitry to ensure a proper separation of the portion of a row between the starting and ending positions. The manipulation of the scanned information is time consuming or expensive depending on whether the rows are handled sequentially or in parallel with other rows. The present invention avoids these disadvantages and, contrary to Kawa's technique, is independent of the final recognition process.

According to the present invention a method of recognising a printed character comprises scanning over a representation of said character along a plurality of scan lines,

deriving for each scan line a plurality of measurements based on the transitions between areas of said character and areas of the background on which the character is printed encountered during said scan,

creating for each scan line a vector representative of the measurements derived for said scan line,

and logically combining selected ones of said vectors in order to identify said character.

According to another aspect of the invention apparatus for use in recognising a printed character comprises means for scanning over a representation of said character along a plurality of scan lines,

means for deriving for each scan line a plurality of measurements based on the transitions between areas of said character and areas of the background on which the character is printed encountered during said scan

means for creating for each scan line a vector representative of the measurements derived for said scan line,

and means for logically combining selected ones of said vectors in order to identify said character.

Figure 1 is a conceptual representation of a character recognition system in accordance with the invention.

Figures 2A to 2E show examples of transition measurements utilized in the system of the invention.

Figures 3A to 3C show examples of shape discriminating features.

Figure 4 shows a logic tree device for identifying a character.

Figure 5 shows a logic tree device for distinguishing a class discriminating feature of a character.

In order to utilize the recognition system of the present invention as described below it is necessary for the character to be recognized first to be represented as a plurality of bits in a matrix and for this representation to be converted to a normalized form. One way of obtaining such a normalized character representation is described in U.S. Patent Application S.N. 453018 (CT9-81-009). However, other normalizing techniques could be used. The normalization process does not perform any part of the present invention and will not be described herein.

After the character representation has been normalized, the next step in the process of character recognition is the extraction of transition measurements from the character representation. Four transition measurements are found to be particularly valuable in identifying characters although other types of measurements can be used and are often needed to obtain an unambiguous identification of the character. The four basic transition measurements which have been found to be particularly useful are the leading white, leading black, transitional and trailing white measurements defined below.

The leading white run length measurement is a measure of the distance between the start of a scan line of a character and the first occurrence of a black representation of a blank area of the character being scanned.

The leading black run length measurement is a measure of the distance between the leading edge of a black area and the next instance of a white area being scanned.

The transitional measurement is a measure of the number of changes from black to white in a scan line. This indicates the number of black lines scanned by the scan line.

The trailing white run length measurement is a measure of the distance from the trailing edge of the last black area scanned to the end of a scan line.

The system may be used to recognize a character for which the normalized representation is 16 scan lines high and 13 columns wide. The transition measurements for each scan line are recorded in a Transition Measurement Vector of 16 bits in accordance with a code. In one embodiment the first three bits of the Transition Measurement Vector indicate the leading black run length measurement, the next five bits indicate the leading white run length measurement, the next four bits indicate the trailing white run length measurement and the last four bits indicate the number and nature of the black to white transitions in the transitional measure. The first bit of the last group may indicate whether more than a single bit representing white occurs between the bits representing the two detected black areas of a black-white-black transition, whereas the last three bits actually indicate the number of black to white transitions encountered.

To implement the above described arrangement the Transition Measurement Vector is coded as follows:

<u>Bit</u>  <u>Condition</u>  <u>Indication</u>

| Bit | Condition | Indication |
|-----|-----------|------------|
| 1 | On | Leading black run length (LBRL) = 3 |
| 2 | On | LBRL = 4 |
| 3 | On | LBRL > 4 |
| 4 | On | Leading white run length (LWRL) = 2 |
| 5 | On | LWRL = 3 |
| 6 | On | LWRL = 4 or 5 |
| 7 | On | LWRL = 6 |
| 8 | On | LWRL > 6 |
| 9 | On | Trailing white run length (TWRL) = 3 |
| 10 | On | TWRL = 4 or 5 |
| 11 | On | TWRL = 6 |
| 12 | On | TWRL > 6 |
| 13 | On | Multi white bit (MWB) for the black, white, black transition |
| 14 | On | Single black to white transition |
| 15 | On | Black to white to black transition |
| 16 | On | Black, white, black, white, black transition |

The Transition Measurement Vectors are obtained by a single table look-up and are stored in a suitable register. The table conceptually consists of $2^{13}$ vectors each of which has a unique address, where each address represents one of the possible different combinations of 13 bits which can result from a scan line . The table size is significantly reduced in the actual implementation by using a table with only $2^{10}$ vectors having addresses based on the right-most ten bits of scan line. In order to accommodate the information from the first three bits of the scan line the value obtained from the table is modified to provide a final Transition Measurement Vector that represents the entire scan line. For a representation of the character "8" the table look-up procedure might be illustrated by the following:

CT9-82-001                    6

| Pattern of Video Bits | Transition Measurement Vector |
|---|---|
| WWWWWWBBBBWWW | 0100001010000100 |
| WWWWBBBWWBBWW | 1000010000001010 |
| WWWBBWWWWWBBW | 0000100000001010 |
| WWWWBBWWWBBWW | 0000010000001010 |
| WWWWWBBWBBWWW | 0000010010000010 |
| WWWWWWBBBWWWW | 1000001001000100 |
| WWWWWWWBBWWWW | 0000000101000100 |
| WWWWBBBWBBWWW | 1000010010000010 |
| WWBBBWWWBBWWW | 1001000010001010 |
| WBBWWWWBBWWWW | 0000100001001010 |
| BBBWWWBBWWWWW | 1000000001001010 |
| BBWWWBBWWWWWW | 0000000000101010 |
| WBBWWBBWWWWWW | 0000100000101010 |
| WBBWWBBWWWWWW | 0000100000101010 |
| WBBBBBBWWWWWW | 0010100000100100 |
| WWBBBBWWWWWWW | 0101000000010100 |

The Transition Measurement Vector obtained for the character may then used in a subsequent recognition and decision process, as will be more fully described hereinafter.

The transition measurement philosophy lends significant invariance to the recognition logic when dealing with the stroke width , shape, size and orientation distortions of unconstrained characters as described below.

The leading and trailing white run lengths generally define the external outline of the character. The built-in ORs in the logic allow a degree of variability in pattern, shape and size.

Black run lengths provide information about stroke thickness and length characteristics and provide the dimensional depth needed to complement the white run lengths. The associated black gating provides an effect which compensates for stroke perturbations but retains the necessary separation between vertical and horizontal strokes.

Black gating of the transitions provides the ability to compensate for slanted, misregistered and distorted characters. The transitions themselves provide an inherent OR'ing effect that allows characters of the same class to be recognised by common features while maintaining separation from other classes. They compensate for the more severe shape distortions while providing an effective normalization of the character size.

When actually attempting to recognize a hand-printed character it is obviously prudent to use all the tools available to perform the recognition process. It has been found that unambiguous character recognition can be most readily obtained by using a judicious combination of approaches to the recognition process. It is most often necessary to identify a character by the combined use of the Transition Measurement Vectors with an interpretation of the normalized character representation to obtain unambiguous identification of the character. In other situations it may be preferable to seek out other special characteristics of the normalized representation to obtain character identification. The recognition system of the present invention is designed to take best advantage of all the identification techniques which have been developed including the unique Transition Measurement Vector scheme described herein.

A further identification expedient which has been found useful is the use of character class discriminating features. These features are specifically designed to resolve the more difficult character separations by analyzing a more detailed topological evaluation of the actual character. These features are designed over transition measurement domains to provide better discrimination between character classes.

After the character representation has been normalized, the transition measurements have been taken and the class discriminating features have been determined, the actual process of identifying the character is started. In the preferred form of this identification process, a logic tree and verifier unit is used to obtain the character identity. The logic tree consists of a series of logic modules, each of which is designed to identify whether a character to be identified has a particular feature or attribute. By logically combining a series of these logic modules, it can be established that the character has a particular identity. When this is achieved the identity is verified by comparing the character information to a tightly designed boolean expression for the character. If verification is obtained, the character is identified and recognized. If verification is not obtained, further processing is undertaken to determine whether the character could have another identity.

The recognition process will now be more fully explained in relation to the drawings.

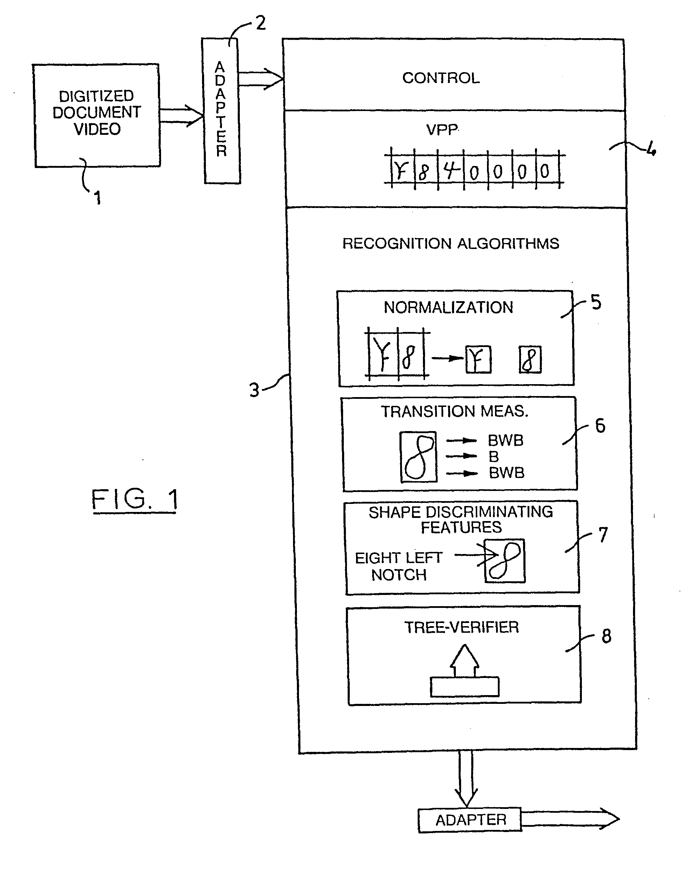

Figure 1 shows, conceptually, the overall character recognition system. The character representation is converted to digitized document video 1 which is fed through a communication adapter 2 to a data processor 3. The digitized video signal is subjected to video preprocessing 4 so that the information for each character is separated from that for each other character. The preprocessing also ensures that the character representation is adequately justified so that the areas containing no portions of the character representation are not processed and good overlay characteristics are maintained. A suitable video preprocessing operation is more fully described in U.S. Patent Application S.N. 453018 (CT9-81-009).

After the preprocessing is completed the character representation is normalized at 5. One suitable form of character normalization is described in hereinbefore identified U.S. Patent Application S.N. 453018 (CT9-81-009). Normalization provides a standard basic size for each character representation so that comparisons can be made more expediently and reliably.

After the character has been normalized, specified transition measurements are taken at 6. These measurements provide information as to the nature, frequency and occurrence of transitions in the character image and are obtained by scanning the character representation as described above. Salient measurements of the distance traversed over a particular colour in each scan are also provided.

The normalized character representation is also used to develop class discriminating features of the character at 7. For example, the system may recognize that the character has a "left-notch" which is characteristic of the character "8".

After the normalized character transition measurement and shape discriminating feature information has been collected, a logic tree in a logic tree and verifier unit 8 is used to identify the character as described more fully hereinafter. After identification by the logic tree, the character identification is verified in a tightly designed boolean logic verifier in the logic tree and verifier unit 8.

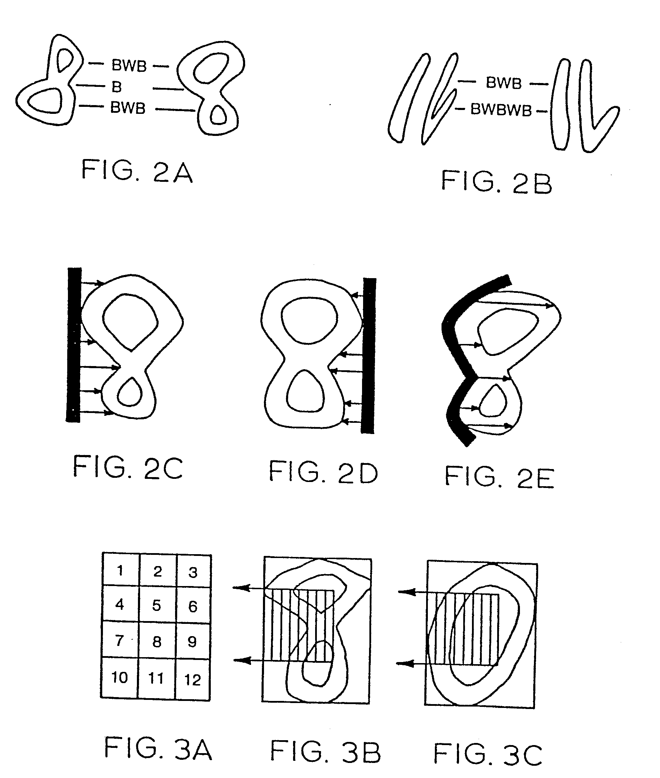

Figures 2A and 2E show some examples of the transition measurements and serve to demonstrate the relative uniformity of the measurements for a specific character even where two presentations of the same character may have widely differing shapes.

Figure 2A shows the black to white transition measurements during three scans of the character "8". The first scan detects a white area between two black areas as indicated by the letters "BWB". The second scan detects only a single black transition as indicated by the letter "B". The third scan again indicates a "BWB" transition indicating a white area between two black areas. As is readily apparent, even though the two versions of the character "8" are very different they both provide essentially the same transition information. As this information is relatively invariable it becomes very useful in helping to identify the character.

Figure 2B shows two rows of similar transition measurements for another character, again showing that, even where the shape of the character may change, there is little variance of the features of the character determined by the transition measurements.

Figure 2C shows how the leading white run length measurement is taken. The normalized character representation is left justified so that at least some portion of the character representation coincides with the baseline from which all scans start. For each scan a count is taken of the number of column or bit positions between the baseline and the first occurrence of black in the selected row. According to the present invention certain values for the measurements have been selected for the Transition Measurement Vector codes and the actual values of the measurements are compared with these selected values. In the specific preferred embodiment described hereinbefore the measurement of a leading white run-length is coded as having a value of two bits, three bits, four or five bits, six bits, or greater than six bits. A coded representation of this measurement is stored in the fourth to eighth bit positions of the Transition Measurement Vector for the scan as described above.

Fig. 2D shows the measurement of the trailing white run length (TWRL). In the specific embodiment described hereinbefore this measurement is coded as having a value of three bits, four or five bits, six bits or greater than six bits. The coded representation of this measurement is stored in the ninth to twelfth bit positions of the Transition Measurement Vector.

Fig. 2E shows the measurement of the leading black run length (LBRL). This measurement is taken from the column in which a black area first occurs to the next column having a white area. The measurement is coded as having a value of three bits, four bits or greater than four bits and coded representation of these measurements are stored in the first three bit positions of the Transition Measurement Vector.

The last four bit positions of the Transition Measurement Vector are used to indicate the number of colour transitions in a scan and a specific white bit property as described above.

In summary, each 13 bit row of the normalized character at 5 provides a 16 bit Transition Measurement Vector at 6.

In an alternative embodiment of the invention the Transition Measurement Vector is coded as follows:

| Bit | Description When Bit On |
|------|------------------------|
| 1 | Leading black run length = 3 |
| 1 & 2 | Leading black run length = 4 |
| 1 to 3 | Leading black run length > 4 |
| 4 | Leading white run length = 2 |
| 4 & 5 | Leading white run length = 3 |
| 4 to 6 | Leading white run length = 4 or 5 |
| 4 to 7 | Leading white run length = 6 |
| 4 to 8 | Leading white run length > 6 |
| 9 | Trailing white run length = 3 |
| 9 & 10 | Trailing white run length = 4 or 5 |
| 9 & 10 | Trailing white run length = 6 |
| 9 to 12 | Trailing white run length > 6 |
| 13 | Indicates more than a single white bit between two black areas (only when bit 15 is on) |
| 14 | Indicates a single black to white transition |
| 15 | Indicates a black to white to black transition |
| 16 | Indicates black to white to black to white to black transition |

In this second embodiment, all the bits representative of a particular value of a measurement remain "on" rather than being switched "off" when a higher value is detected. For example, for a leading black run length of four bits, both bits 1 and 2 are retained "on" whereas in the previous embodiment bit 1 would be turned "off".

As each normalized character representation is sixteen rows high, each character would be represented by sixteen of these sixteen bit Transition Measurement Vectors at 6. The Transition Measurement Vectors for each character are stored in a thirty-two byte buffer at 6 for use during the recognition process.

As indicated hereinbefore, the normalized character at 5 and the transition measurements at 6 alone often provide insufficient information so as to be able to identify the hand printed character unambiguously . Therefore, additional information about the character is assembled. Some of this additional information is obtained directly from the normalized character representation itself, whereas other information is obtained from the transition measurements.

Figures 3A to 3C show an example where class discriminating feature information derived from the normalized character representation is useful in assisting the process of identifying the character. In order to identify features which will discriminate between classes of characters, the character representation is divided into twelve areas. By selecting certain of these areas and identifying the classes of characters to be separated, and by strategically selecting bits from the selected areas it is possible to identify a feature showing the desired discrimination between the classes. The left notch feature of the character "8" shown in Figures 3A to 3C is an example of this discriminating feature selection process. A comparison of the bit patterns in the areas 4, 5, 7 and 8 will readily indicate whether the character has the left notch feature of the character "8" or fails to have this feature as in the case of the character "0" shown in Figure 3C. In a similar manner, other significant features of a specific character or specific class of characters can be identified and used in the recognition process.

Once having obtained the normalized character representation at 5, the Transition Measurement Vectors at 6 and special features of a character at 7, the recognition process is initiated. This recognition process consists of initially performing logical selection by use of tree logic and when the identity of the character has been determined, verifying this identity by use of a tightly designed boolean expression. This determination and verification process ensures that the character is unambiguously recognized. In the case where verification is not obtained, then the tree logic process may be repeated using a different selection of logical processes. The process can be repeated as many times as desired.

In the specific example described hereinafter, the character information, including the normalized character representation at 5, the discriminating feature information at 7, and the Transition Measurement Vectors at 6 are available to a tree logic device 8. The tree logic device 8 consists of a series of logic circuits which are designed to separate a selected class of characters having a specific characteristic from other classes of characters not having that characteristic. The use of a particular logic circuit is determined by the results of previous logical examinations of the character information.

The present example gives a very simplified showing of the tree logic process. In actual design, the tree logic device could consist of a thousand or more logic circuits. The number of logic circuits required is largely determined by the size of the character class to be recognized and the differences between characters in the character class. The use of the Transition Measurement Vectors described herein significantly reduces the size of the tree logic device necessary to obtain recognition as compared to that required where only the normalized representation was used to provide recognition information or even where some form of measurement was taken, such as in the Kawa Patent Specification US-A-4,155,072 identified hereinbefore.

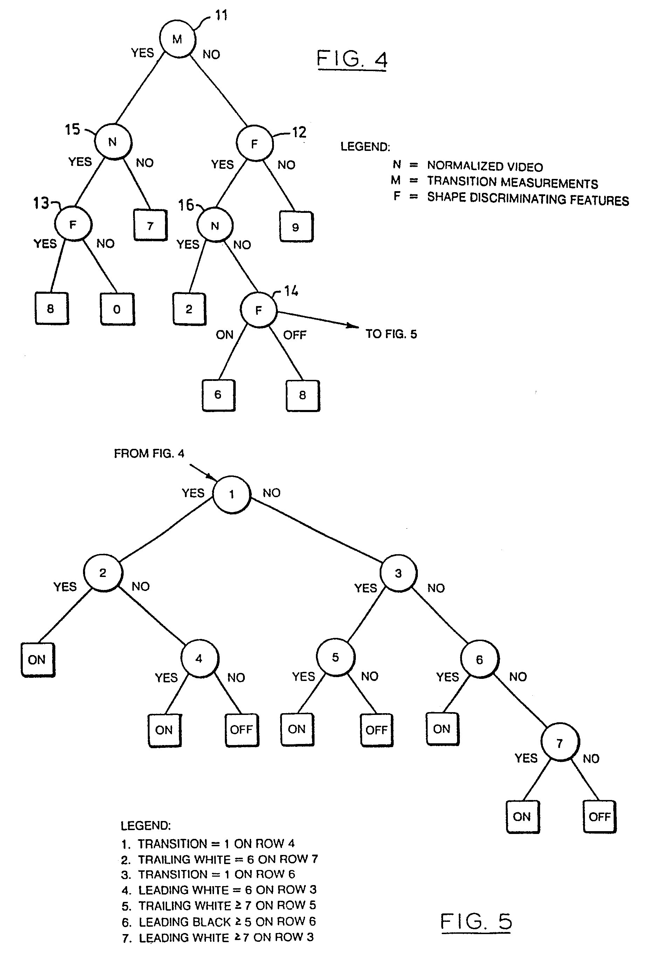

In the simplified example shown in Figure 4 the Transition Measurement Vectors are first examined at node 11 for a particular characteristic. If the characteristic is found the logic proceeds down the left side of the tree whereas, if it is not found, the logic proceeds in the other direction. In practice, the tree logic device is designed so as to perform those tests which provide the most positive separation between character classes first. In almost every case, this leads to the use of the Transition Measurement Vectors in the first or very nearly first test applied to the character information. As can be readily seen from Figure 4, a series of tests are carried out on the character information to finally lead to character identification. As shown in the example, some of these tests involve looking at the actual normalized representation such as at nodes 15 and 16 whereas others use shape discriminating features such as at nodes 12, 13 and 14 or the transition measurements.

Figure 5 shows an example of a logic tree for distinguishing the character "6" from the character "8" as would be performed at node 14 (Figure 4) by a test of the upper portion of the character using the Transition Measurement Vectors obtained for the character. In this process, certain transition measurements of the character, such as the length of the trailing white run in the seventh scan, are examined because they are seen as significant in separating the character "8" from the character "6". A measurement such as the length of the trailing white run in scan 7 would provide no useful information in distinguishing the character "0" from the character "8" and, hence, would not be used in obtaining separation of these latter two characters. As is readily apparent from Figure 5, a series of logical gating operations is performed based on the results of a previous logical gating operation until such time as the tree logic is satisfied that the character can be of only one form. In the present example, when the logic reaches the conclusion that the character feature sought exists and provides an "On" output as shown in Figure 5, then the character is assumed to exhibit the "6" stem feature rather than the "8" top feature. If an "Off" output is obtained the character is assumed to have the "8" top feature. At this point, the tree logic identifies the character.

Of course, as is well known in the art, the identity of the character must be verified since, even with the sophisticated recognition process described above, some ambiguity can still exist. To avoid the problem of providing a positive, but erroneous, recognition, the character identification is verified by means of tightly designed boolean logic. An example of a suitable logic tree and verifier is described in an article entitled "Two-Level Character Recognition" published on pages 3663-4 of the January, 1981 issue of the IBM Technical Disclosure Bulletin.

As is readily apparent from the above description, the provision of Transition Measurement Vectors for each character to be recognized improves the recognition process significantly over that previously known. The Transition Measurement Vectors provide a mechanism for obtaining information about a character which eliminates the distortions usually associated with recognition systems for recognizing hand printed characters. In the prior art, a normalized representation of the character was often used to identify the character. This often resulted in the character not being identified or being improperly identified because the normalized form of the character did not closely conform to the ideal shape provided in the recognition process. This problem is completely overcome by the present invention because the Transition Measurement Vector almost invariably provides a similar measurement for the same character regardless of how distorted it may have been in its original recording. Furthermore, the Transition Measurement Vectors do not destroy the properties of separation that exist in the normalized video representation of the character. By judicious selection of the characteristics to be measured, separation between similar but different characters is retained in the Transition Measurement Vectors. Consequently, by using Transition Measurement Vectors in the recognition process, the character identification process is simplified significantly.

/.'

CLAIMS

1.    A method of recognising a printed character comprising

scanning over a representation of said character along a plurality of scan lines,

deriving for each scan line a plurality of measurements based on the transitions between areas of said character and areas of the background on which the character is printed encountered during said scan,

creating for each scan line a vector representative of the measurements derived for said scan line,

and logically combining selected ones of said vectors in order to identify said character.

2.    A method as claimed in claim 1 in which said scan lines extend in parallel lines across said representation of said character.

3.    A method as claimed in either of the preceding claims in which said measurements include the distance between a transition from an area of one kind to an area of the other kind and a reference point.

4.    A method as claimed in any one of the preceding claims in which said measurements include the number of transitions from an area of one kind to an area of the other kind.

5.    A method as claimed in any one of the preceding claims including the steps of determing the presence or absence in said character of one or more features which distinguish said character as belonging to a particular class of characters and of utilizing such information to assist in identifying said character.

18

6. Apparatus for use in recognising a printed character comprising

means for scanning over a representation of said character along a plurality of scan lines,

means for deriving for each scan line a plurality of measurements based on the transitions between areas of said character and areas of the background on which the character is printed encountered during said scan

means for creating for each scan line a vector representative of the measurements derived for said scan line,

and means for logically combining selected ones of said vectors in order to identify said character.

7. Apparatus as claimed in claim 6 comprising means for storing all the possible vectors and means for selecting a vector in accordance with the value of a signal derived from each scan.

FIG. 1

FIG. 2A

FIG. 2B

FIG. 2C          FIG. 2D          FIG. 2E

FIG. 3A          FIG. 3B          FIG. 3C

0114996

## FIG. 4

LEGEND:

N = NORMALIZED VIDEO
M = TRANSITION MEASUREMENTS
F = SHAPE DISCRIMINATING FEATURES

TO FIG. 5

FROM FIG. 4

LEGEND:

1. TRANSITION = 1 ON ROW 4
2. TRAILING WHITE = 6 ON ROW 7
3. TRANSITION = 1 ON ROW 6
4. LEADING WHITE = 6 ON ROW 3
5. TRAILING WHITE ≥ 7 ON ROW 5
6. LEADING BLACK ≥ 5 ON ROW 6
7. LEADING WHITE ≥ 7 ON ROW 3

## FIG. 5